# EUROPEAN PATENT APPLICATION

(11) **EP 2 149 304 A1**
(43) Date of publication of application: **03.02.2010**
(21) Application number: 08425527.2
(22) Date of filing: 30.07.2008
(51) Int. Cl.: A21D 13/00, A21D 15/00, A21D 15/02, A23L 1/00

(54) **A filled bakery product and a process for its preparation**

(71) Applicant: Peruffo, Alessandro, 15717 Vermezzo (MI) (IT)
(72) Inventor: Peruffo, Alessandro, 15717 Vermezzo (MI) (IT)
(74) Representative: Robba, Pierpaolo

(57) **Abstract**

A bakery product (1) comprises a flour-based envelope (2) and a filling (3) such as cooked vegetables and/or meat which is layered on the inside surface of said envelope (2) which in turn is rolled up and closed at its ends.

There it is also disclosed a process for preparing such filled bakery product (1) providing for spreading a layer of filling (3) on a central portion of a sheet of dough and rolling up the sheet, joining the peripheral edges of the dough envelope, and baking the rolled and filled product to sterilize all the ingredients.

## Description

The present invention relates to a bakery product of the type comprising a bread-based or flour-based envelope and a filling comprising meat and/or vegetables or cheese and possibly additional preparations such as sauces and similar seasonings. The product is particularly adapted for a break lunch, snacks or light meals (so-called snack).

Bakery products of this type are known under several names such as panino, sandwich, tramezzino, toast etc. and provide for an envelope or container filled with meat, vegetables and additional tasting preparations, and are aimed to supply the consumer with a given amount of food as a substitute of a complete meal.

The bread-based or flour-based portion is normally in form of a small bread or roll cut in two parts (for instance in the sandwiches) or of slices of bread (tramezzino, toast, sandwich).

The known drawbacks of the above mentioned products that have not yet been overcome in a satisfactory way, are the followings.

Currently, for sanitary reasons, sandwiches, panini and the like are prepared in advance with respect to their consume, by joining together the bread and the filling (both already baked/cooked), and then dispensed to the consumer or packed under vacuum to be distributed for the retail sale. As an example, the bread is cut and stuffed with ham or other cut meats, cheeses, creams or other, and then the product is vacuum-sealed in a package, without being subjected to any type of sterilization of the ingredients. This type of sandwich has a rather limited duration and however the bacterial count has already been established during its preparation.

US2007122527 discloses a dual-component bakery product comprising an envelope made of dough and a filling in which the filling is heated by electromagnetic waves so as to initiate a cooking state and then the envelope is baked in a heat transfer oven.

W02007138406 discloses a bakery product comprising an inside layer of filling circumferentially surrounded by an outside layer based on flour. The filling has a cylindrical shape and extends for the entire length of the product and comes into contact with the outside environment at each end of the product itself.

EP1316256 discloses filled snack comprising a base layer of sponge cake and a filling layer, juxtaposed and rolled up to form a substantially cylindrical log, having a cross section with the appearance of a concentric flat double spiral.

It is an object of the present invention to provide for a bakery product in which all the ingredients have been sterilized, and more particularly an improved stuffed or filled sandwich, that overcome the limitations and the drawbacks of the prior art. It is another object of the invention to realize an improved process for producing the above mentioned bakery product.

The invention achieves these objects through a bakery product according to claim 1 and a process according to claim 4.

Further advantageous characteristics are recited in the dependent claims.

All the ingredients of the fillings in the product according to the invention are fresh and sterilized, so that the product remains unaltered and uncontaminated from external agents until the package is opened.

Moreover the product is a long-life one since from the cooking to the packaging it has not been exposed to any bacterial pollution (through the cold chain).

The invention will now be disclosed with reference to the attached drawings that illustrate some preferred but not limiting embodiments of the invention, in which:

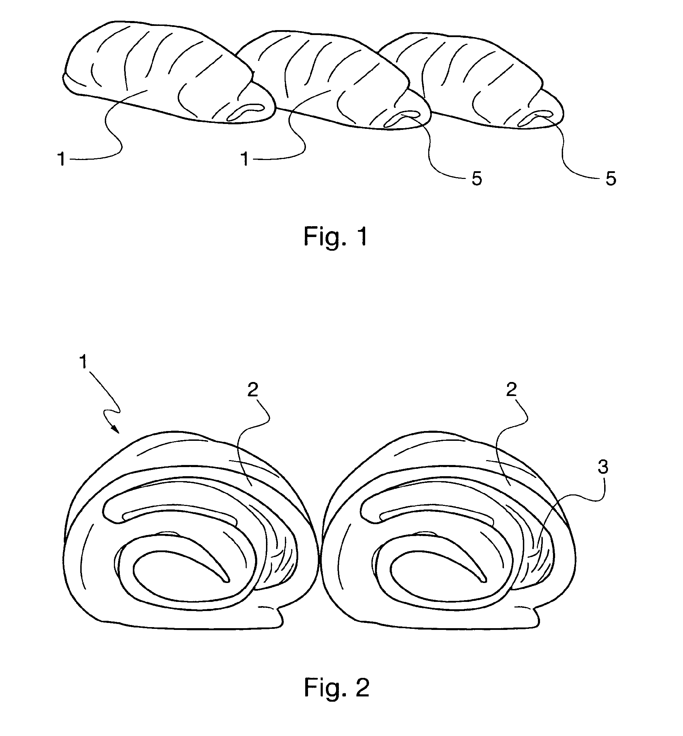

Figures 1 and 2 show some products according to the invention, respectively in a perspective view and in cross section view;
Figures from 3a) to 3e) schematically illustrate some steps of the process for preparing a product according to the invention.

For simplicity, throughout all the Figures the same references have been used to indicate the same components or substantially equivalent components.

With reference to Figures 1 and 2, a bakery product according to the invention is generally indicated by the numerical reference 1 and comprises a flour-based envelope 2 in form of a sheet rolled up and closed at both ends 5, and containing a filling 3 layered with said envelope.

The cooked (baked) flour-based envelope 2 is formed by a bread dough or other similar mixture, and incorporates a filling that can comprise one or more of meats, cheeses, vegetables, salumi (cured meats), sauces and creams.

Both the envelope and the filling of the product have been submitted to cooking (baking) and the layered arrangement of the envelope 2 and the filling 3 comes from the rolling up of the envelope covered by the filling. In the illustrated embodiments, the layers of the dough sheet and of the filling form two concentric flat spirals, although other arrangements are possible.

Preferably the peripheral edges of the envelope ends are pressed one against the other and are joined during the baking so that the resulting product is substantially closed.

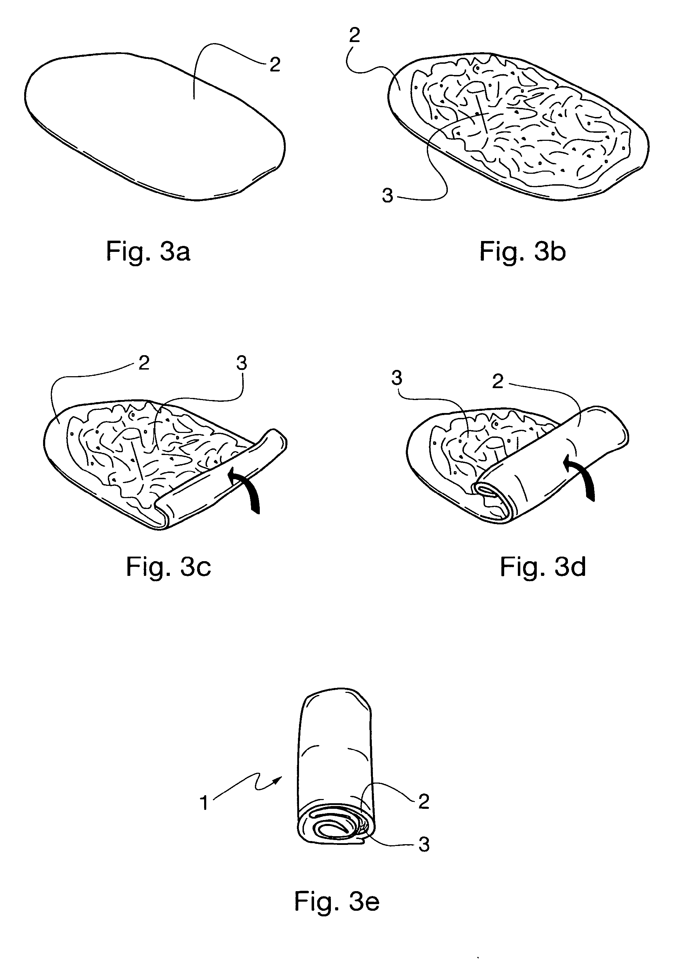

A process for preparing a product according to the invention will now be illustrated with reference to Figure 3.

A bread dough or a similar flour-based mixture (for instance flour, water, yeast) is prepared and kneaded in usual way, and is then divided into elongated flat portions 2 of the desired size and spread over a plane surface for the filling addition. The shape of the portion 2 can be substantially rectangular as shown in Figure 3a), and preferably with al least one of the ends slightly tapered.

A layer of the desired filling 3, constituted by cured meats of various types, vegetables, cheeses, sauces or creams, is layered and spread over the central portion of the dough sheet (Fig. 3b) and then the layered product is rolled up over itself (Fig.s 3c and 3d) so as to form a filled rolled product (Fig. 3e). The tapered end of the sheet makes easier the adhesion of the exposed end over the roll.
It is pointed out that for illustrative purposes the front ends of the products shown in Fig. 3e are open, i.e. the edges of the end portion have not yet been sealed to close the product. The roll is then let to leaven in covered carts.

Advantageously the side edges of the elongated portion 2 of the dough sheet are pressed together so that the ends of the rolled product become sealed to one another during the following baking.

After the rolled and filled product has reached the desired level of rising, it is carried into an oven at a temperature and for a time enough for both a proper baking and a sterilization of all the ingredients, including the dough. The baking temperature is advantageously in the order of about 300°C and the product is kept in the oven for a time between 10 and 15 minutes, preferably for about 12 minutes.

At the end of the baking the product is directly transferred to a device for fast lowering its temperature from about +90°C to +3°C where the product remains for about 90 minutes in order to prevent any establishment of bacterial count.

The product coming out from the temperature lowering device is packed under vacuum in a modified atmosphere without additives and preservative to ensure the sanitary conditions and the integrity of the product.

The process according to the invention allows a conservation of the entire product for 7/8 days, and when the product is stored at a temperature between 4°C and 6°C it can be transported anywhere without suffering any alterations. When the product has to be sold or dispensed, the retailer/consumer opens the package and heats the product that can be consumed without having been manipulated and therefore has not been subjected to hygienic contaminations.

## Claims

1. A bakery product (1) comprising a flour-based envelope (2) and a filling (3) comprising vegetables and/or meat, both cooked, **characterized in that** said filling (3) is layered on the inside surface of said envelope (2) which is rolled up and closed at its ends.

2. A bakery product (1) according to claim 1, **characterized in that** its cross section has the appearance of a concentric flat double spiral.

3. A bakery product (1) according to claim 1 or 2, **characterized in that** said filling (3) includes one or more than the followings ingredients: meats, cheeses, vegetables, salumi (cured meats), sauces and creams.

4. A process for preparing a filled bakery product (1) comprising the steps of:
a) providing a sheet of dough (2);
b) depositing a layer of filling (3) on a central portion of said sheet of dough;
c) rolling up said sheet of dough (2) layered with said filling (3);
d) baking said rolled and filled product at a temperatures and for a time adapted to sterilizing all the ingredients.

5. A process according to claim 4, further **characterized by** the steps of:
e) lowering the temperature of the baked roll bringing it to at least +3°C for a time of at least 90 minutes;
f) after said cooling, packing the product under-vacuum and in modified atmosphere.

6. A process according to claim 4 or 5, **characterized in that** the ends (5) of said rolled and filled sheet of dough are sealed before said baking step.

7. A process according to claim 4, **characterized in that** it provides a leavening (rising) step before the baking of said rolled and filled sheet of dough.

8. A process according to claim 4, **characterized by** the fact that the said cooking step is accomplished at a temperature of at least 300°C for a time comprised between 12 and 15 minutes.
